# EUROPÄISCHE PATENTSCHRIFT

(11) **EP 1 230 309 B1**
(45) Veröffentlichungstag und Bekanntmachung des Hinweises auf die Patenterteilung: **17.09.2003**
(21) Anmeldenummer: 00975915.0
(22) Anmeldetag: 25.10.2000
(51) Int. Cl.: C09C 1/00, C03C 1/04, C08K 9/02

(54) **GONIOCHROMATISCHE GLANZPIGMENTE AUF BASIS IN EINER REDUZIERENDEN ATMOSPHÄRE ERHITZTER, TITANDIOXIDBESCHICHTETER SILIKATISCHER PLÄTTCHEN**
GONIOCHROMATIC LUSTER PIGMENTS WHICH ARE BASED ON TITANIUM DIOXIDE-COATED SILICEOUS PLATELETS HEATED IN A REDUCTIVE ATMOSPHERE
PIGMENTS BRILLANTS GONIOCHROMATIQUES SE BASANT SUR DES PAILLETTES DE SILICATES RECOUVERTES DE DIOXYDE DE TITANE, CHAUFFEES DANS UNE ATMOSPHERE REDUITE

(30) Priorität: 08.11.1999 DE 19953655
(43) Veröffentlichungstag der Anmeldung: 14.08.2002
(73) Patentinhaber: BASF AKTIENGESELLSCHAFT, 67056 Ludwigshafen (DE)
(72) Erfinder: SEEGER, Oliver, 68163 Mannheim (DE); SCHMID, Raimund, 67435 Neustadt (DE); MRONGA, Norbert, 69221 Dossenheim (DE); ADEL, Jörg, 67071 Ludwigshafen (DE)
(86) Internationale Anmeldenummer: EP0010522
(87) Internationale Veröffentlichungsnummer: WO01034710

(56) Entgegenhaltungen:
- EP-A- 0 708 154
- EP-A- 0 753 545
- EP-A- 0 832 943
- EP-A- 0 959 109
- DE-A- 19 618 569

## Beschreibung

Die vorliegende Erfindung betrifft neue goniochromatische Glanzpigmente auf der Basis von in einer reduzierenden Atmosphäre erhitzten, titandioxidbeschichteten silikatischen Plättchen, die mindestens ein Schichtpaket aus
A) einer farblosen Beschichtung mit einem Brechungsindex n ≤ 1,8 und
B) einer sichtbares Licht selektiv absorbierenden, Eisen(III)oxid enthaltenden Beschichtung mit einem Brechungsindex n ≥ 2,0
aufweisen.

Weiterhin betrifft die Erfindung die Herstellung dieser Glanzpigmente sowie ihre Verwendung zum Einfärben von Lacken, Druckfarben, Tinten, Kunststoffen, Gläsern, keramischen Produkten und Zubereitungen der dekorativen Kosmetik.

Glanz- oder Effektpigmente werden in vielen Bereichen der Technik eingesetzt, beispielsweise in Automobillacken, in der dekorativen Beschichtung, der Kunststoffeinfärbung, in Anstrichfarben, Druckfarben, insbesondere Sicherheitsdruckfarben, sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Aufgrund ihrer nichtkopierbaren optischen Effekte gewinnen diese Pigmente auch zunehmende Bedeutung für die Herstellung von fälschungssicheren Wertschriften, wie Geldscheinen, Schecks, Scheckkarten, Kreditkarten, Steuermarken, Briefmarken, Bahn- und Flugtickets, Telefonkarten, Lotterielosen, Geschenkzertifikaten, Ausweisen und Identifikationskarten.

Kennzeichnungen, die mit den Effektpigmenten angefertigt wurden, und das Fehlen dieser Kennzeichnungen oder ihre Veränderung, beispielsweise in einer Farbkopie (Verschwinden von Farbflops und Glanzeffekten), sind ohne Hilfsmittel mit bloßem Auge sicher erkennbar und ermöglichen so eine leichte Unterscheidung des Originals von der Kopie.

Von besonderem Interesse sind goniochromatische Glanzpigmente, die einen winkelabhängigen Farbwechsel zwischen mehreren intensiven Interferenzfarben und damit ein attraktives Farbenspiel zeigen.

Bislang sind eine Reihe von goniochromatischen Glanzpigmenten auf Basis metallischer oder für sichtbares Licht zumindest teilweise durchlässiger, nichtmetallischer Substrate, die jeweils mit einer Kombination niedrigbrechender und hochbrechender bzw. reflektierender Beschichtungen belegt sind, bekannt.

Eine wichtige Gruppe bilden dabei die goniochromatischen Glanzpigmente, bei denen das plättchenförmige Substrat mehrfach mit niedrigbrechendem Metalloxid (insbesondere Siliciumdioxid) und hochbrechendem Metalloxid (insbesondere Eisen(III)oxid oder Titandioxid) belegt ist.

So sind in den EP-A-708 154 und 753 545 goniochromatische Glanzpigmente beschrieben, die auf Aluminium- bzw. Eisenoxidplättchen basieren, welche zunächst mit einer Siliciumdioxidschicht und dann mit einer Eisen(III)oxidschicht belegt sind. Die Interferenzfarben dieser Pigmente liegen vorwiegend im roten Farbtonbereich.

Auch das aus DE-A-196 18 569 bekannte Glanzpigment auf Basis von aufeinanderfolgend mit Titandioxid, Siliciumdioxid und Eisen(III)oxid beschichteten Glimmerplättchen weist eine orangebraune Körperfarbe und kupferne Interferenzfarbe auf. Glanzpigmente mit blauer Interferenzfarbe und hoher Transparenz sind nach der DE-A-196 18 569 zu erhalten, wenn die äußere Eisenoxidschicht durch eine weitere Titandioxidschicht ersetzt wird.

Glanzpigmente mit blauer Körperfarbe ergeben sich auch nach der EP-A-933 403 durch aufeinanderfolgende Beschichtung von Glimmerplättchen mit Titandioxid, Siliciumdioxid und Cobaltaluminat.

Schließlich sind aus der EP-A-753 545 sowie der älteren deutschen Patentanmeldung 198 22 046.4 goniochromatische Pigmente auf Basis von Glimmerplättchen bekannt, die eine innere, in Gegenwart von Ammoniak reduzierte Titandioxidschicht aufweisen. Das in der EP-A-753 545 beschriebene Pigment ist zusätzlich mit Siliciumdioxid und Molybdän belegt und hat eine kräftige, blaue Interferenzfarbe, die bei steileren Betrachtungswinkeln nach Violett abkippt. Dieses Pigment bereitet jedoch hinsichtlich der Wasserechtheit Probleme. In der älteren deutschen Patentanmeldung 198 22 046.4 sind die Substratteilchen zusätzlich mit Siliciumdioxid und Titandioxid beschichtet. Es werden intensiv blaue Glanzpigmente mit hohen Helligkeitswerten erhalten.

Der Erfindung lag die Aufgabe zugrunde, weitere goniochromatische Glanzpigmente für den blauen bis grünen Farbtonbereich bereitzustellen, die sich durch vorteilhafte Anwendungseigenschaften auszeichnen.

Demgemäß wurden die eingangs definierten goniochromatischen Glanzpigmente gefunden.

Weiterhin wurde ein Verfahren zur Herstellung dieser Glanzpigmente gefunden, welches dadurch gekennzeichnet ist, daß man die Beschichtungen (A) und (B) unabhängig voneinander entweder naßchemisch durch hydrolytische Zersetzung organischer oder anorganischer Metallverbindungen oder durch Gasphasenzersetzung flüchtiger, organischer oder anorganischer Metallverbindungen auf die in einer reduzierenden Atmosphäre erhitzten, titandioxidbeschichteten silikatischen Plättchen aufbringt.

Schließlich wurde die Verwendung der erfindungsgemäßen Glanzpigmente zur Einfärbung von Lacken, Druckfarben, Tinten, Kunststoffen, Gläsern, keramischen Produkten und Zubereitungen der dekorativen Kosmetik gefunden.

Die erfindungsgemäßen goniochromatischen Glanzpigmente basieren auf in einer reduzierenden Atmosphäre erhitzten, titandioxidbeschichteten silikatischen Plättchen, die eine Mehrfachbeschichtung aufweisen.

Als silikatische Plättchen sind dabei insbesondere helle oder weiße Glimmer geeignet, wobei Schuppen von vorzugsweise naß vermahlenem Muskovit besonders bevorzugt sind. Selbstverständlich können auch andere natürliche Glimmer, wie Phlogopit oder Biotit, künstliche Glimmer, Talk- oder Glasschuppen oder Siliciumdioxidplättchen als Ausgangsmaterial dienen.

Die der Reduktion zugeführten silikatischen Plättchen sind mit einer im wesentlichen aus Titandioxid bestehenden Schicht belegt, die als untergeordnete Bestandteile (im allgemeinen < 5 Gew.-%) weitere, vorzugsweise farblose, Metalloxide wie Zinndioxid, Zirkondioxid, Aluminiumoxid und Siliciumdioxid enthalten kann.

Die Größe der Silikatplättchen ist an sich nicht kritisch und kann auf den jeweiligen Anwendungszweck abgestimmt werden. In der Regel haben die Plättchen mittlere größte Durchmesser von etwa 1 bis 200 µm, insbesondere etwa 5 bis 100 µm, und Dicken von etwa 0,1 bis 1 µm, insbesondere um etwa 0,5 µm. Ihre spezifische freie Oberfläche (BET) liegt üblicherweise bei 1 bis 15 m²/g, insbesondere bei 3 bis 12 m²/g.

Die Dicke der TiO₂-Schicht bestimmt die Reflexionsfarbe der Plättchen und beträgt vorzugsweise 50 bis 100 nm (silber) oder 300 bis 340 nm (blau; optische Schichtdicken).

Bei den erfindungsgemäßen Glanzpigmenten sind die titandioxidbeschichteten Silikatplättchen in einer reduzierenden Gasatmosphäre erhitzt worden.

Als reduzierende Gase eignen sich dabei z.B. Ammoniakgas, Wasserstoff, flüchtige Kohlenwasserstoffe (insbesondere C₁-C₄-Alkane) und deren Gemische. Diese Gase werden vorzugsweise im Gemisch mit Inertgasen wie Stickstoff eingesetzt (vgl. EP-A-735 115 und die dort u.a. genannte EP-A-332 071).

Bevorzugte reduzierende Gase sind Ammoniakgas und Gemische von Ammoniakgas mit flüchtigen Kohlenwasserstoffen wie Methan, Ethan und/oder Propan, für die ein Volumenverhältnis von etwa 95 : 5 bis 70 : 30 zu empfehlen ist. Der Stickstoffanteil an der Gesamtgasmenge der jeweils besonders bevorzugten Reduktionsgas/Inertgas-Mischungen liegt vorzugsweise bei bis zu 90 Vol.-% bzw. bei 10 bis 60 Vol.-%.

Geeignete Reduktionstemperaturen liegen in der Regel im Bereich von 400 bis 900°C, wobei bei der Reduktion mit Ammoniakgas Temperaturen von 750 bis 850°C und bei der Umsetzung mit Ammoniakgas/Kohlenwasserstoff-Gemischen Temperaturen von > 800 bis 900°C bevorzugt sind.

Bei der Reduktion werden blaue, reduzierte Titanspezies mit Oxidationszahlen < 4 bis 2 (niedere Titanoxide wie Ti₃O₅, Ti₂O₃ bis zu TiO, Titanoxynitride sowie Titannitrid) gebildet. Üblicherweise werden 5 bis 100 Gew.-% des ursprünglich vorhandenen Titandioxids reduziert.

Reduzierte titandioxidbeschichtete Glimmerpigmente sind im Handel unter dem Namen Paliocrom® erhältlich.

Die reduzierten, titandioxidbeschichteten silikatischen Plättchen sind hochbrechend. Ihr Brechungsindex n beträgt in der Regel ≥ 2,0, vorzugsweise ≥ 2,4. Sie sind für sichtbares Licht in Abhängigkeit von der betrachteten Wellenlänge im wesentlichen durchlässig bis nahezu undurchlässig.

Die erfindungsgemäßen Glanzpigmente weisen eine farblose niedrigbrechende Beschichtung (A) in Kombination mit einer sichtbares Licht selektiv absorbierenden, hochbrechenden, Eisen(III)oxid enthaltenden Beschichtung (B) auf. Sie können mehrere gleiche oder verschiedene Kombinationen (Schichtpakete) (A) + (B) enthalten, bevorzugt ist aber die Belegung mit nur einem Schichtpaket (A) + (B).

Die farblose niedrigbrechende Beschichtung (A) hat einen Brechungsindex n ≤ 1,8, vorzugsweise ≤ 1,6, und im sichtbaren Wellenlängenbereich eine Absorptionskonstante k = 0.

Als Schichtmaterial (A) eignen sich alle niedrigbrechenden farblosen Substanzen, die filmartig und dauerhaft auf die Substratplättchen aufgebracht werden können, wobei anorganische Materialien bevorzugt sind.

Besonders geeignet sind z.B. Metalloxide und Metalloxidhydrate wie Siliciumoxid, Siliciumoxidhydrat, Aluminiumoxid, Aluminiumoxidhydrat und deren Mischungen, wobei Siliciumoxid(hydrat) bevorzugt ist.

Die geometrische Schichtdicke der Beschichtung (A) beträgt im allgemeinen 50 bis 800 nm, vorzugsweise 100 bis 600 nm. Da die Schicht (A) im wesentlichen die Interferenzfarben der erfindungsgemäßen Pigmente bestimmt, hat sie für ein besonders ausgeprägtes Farbenspiel zeigende und daher auch bevorzugte Glanzpigmente, die nur ein Schichtpaket (A) + (B) aufweisen, eine Mindestschichtdicke von etwa 200 nm. Sind mehrere (z.B. 2, 3 oder 4) Schichtpakete (A) + (B) vorhanden, dann liegt die Schichtdicke von (A) bevorzugt bei 50 bis 200 nm.

Mit wachsender Schichtdicke von (A) sind beim trockenen Pigmentpulver in der Aufsicht mehrmals nacheinander die Interferenzfarben Blau-Grün-Gold-Rot-Violett zu beobachten, wobei beginnend mit dem Blau zweiter Ordnung die Winkelabhängigkeit des Farbtons zunimmt. Die Interferenzfarben sind jedoch nur im trockenen Zustand sichtbar und verschwinden im feuchten Zustand oder im Lack vollständig. Durch die zusätzliche Beschichtung mit (B) wird die optisch variable Schicht auch in Lacken sichtbar.

Die selektiv absorbierende, Eisen(III)oxid enthaltende Beschichtung (B) hat einen Brechungsindex n ≥ 2,0, insbesondere ≥ 2,4.

Die Beschichtung (B) besteht bevorzugt im wesentlichen aus α-Fe₂O₃ oder γ-Fe₂O₃ oder deren Mischungen, wobei α-Fe₂O₃-Schichten besonders bevorzugt sind.

Die Beschichtung (B) sollte für sichtbares Licht zumindest teilweise durchlässig sein und hat in der Regel eine geometrische Schichtdicke von etwa 5 bis 80 nm, bevorzugt 10 bis 50 nm, besonders bevorzugt 15 bis 45 nm und ganz besonders bevorzugt 20 bis 40 nm.

Die erfindungsgemäßen Glanzpigmente zeichnen sich durch den gleichmäßigen, homogenen, filmartigen Aufbau ihrer die Substratteilchen vollständig umhüllenden interferenzfähigen Beschichtung und ihr gutes Deckvermögen, ihre ausgeprägte Goniochromatizität, ihr "seidenweiches Aussehen" sowie ihre Stabilität aus.

Überraschenderweise zeigen sie intensiv blaue bis grüne Interferenzfarben, was aufgrund der selektiven Absorption des Eisen(III)oxids im blauen Bereich nicht zu erwarten war, und erweitern damit die Palette der bekannten Glanzpigmente auf vorteilhafte weise.

Bei dem erfindungsgemäßen Verfahren zur Herstellung der Glanzpigmente werden die Beschichtungen (A) und (B) unabhängig voneinander entweder naßchemisch durch hydrolytische Zersetzung organischer oder anorganischer Metallverbindungen oder durch Gasphasenzersetzung (CVD, chemical vapor deposition) geeigneter flüchtiger Metallverbindungen aufgebracht.

Selbstverständlich können beide Vorgehensweisen beliebig zur Herstellung der einzelnen Schichten kombiniert werden. Werden beide Beschichtungen naßchemisch aufgebracht, so erübrigt sich die Zwischentrocknung der mit (A) beschichteten Substratplättchen; wird das gleiche Reaktionsmedium verwendet, so kann ebenfalls die Zwischenisolierung entfallen. Entsprechend ist die Zwischenisolierung üblicherweise auch bei der Durchführung beider Beschichtungsschritte nach dem CVD-Verfahren nicht erforderlich.

Zur Erzeugung der Silicium- und/oder Aluminiumoxid(hydrat)schichten (A) sind der naßchemische und der CVD-Herstellungsweg gleichermaßen geeignet.

Bei der naßchemischen Variante kann vorteilhaft gemäß dem in der EP-A-668 329 beschriebenen Verfahren vorgegangen werden, bei dem organische Silicium- und/oder Aluminiumverbindungen, bei welchen die organischen Reste über Sauerstoffatome an die Metalle gebunden sind, in Gegenwart der Substratplättchen und eines organischen Lösungsmittels, in welchem die Metallverbindungen löslich sind und welches mit Wasser mischbar ist, hydrolysiert werden.

Die bevorzugte Ausführungsform besteht dabei in der Hydrolyse der Metallalkoholate (insbesondere Tetraethoxysilan und Aluminiumtriisopropanolat) in Gegenwart eines Alkohols (insbesondere Isopropanol) und von wäßrigem Ammoniak als Katalysator.

Verfahrenstechnisch geht man gemäß dem in der EP-A-668 329 beschriebenen Verfahren vorzugsweise so vor, daß man Substratplättchen, Isopropanol, Wasser und Ammoniak vorlegt, diese Mischung unter Rühren auf 40 bis 80°C, insbesondere 60 bis 70°C, erhitzt und eine Lösung des Metallalkoholats in Isopropanol kontinuierlich zudosiert. Nach einer Nachrührzeit von meist etwa 1 bis 15 h kühlt man die Mischung auf Raumtemperatur ab und isoliert das beschichtete Pigment durch Abfiltrieren und Trocknen.

Siliciumoxid(hydrat)beschichtungen (A) können vorteilhaft auch ausgehend von Alkalimetallsilikaten, insbesondere von Natronwasserglas, erzeugt werden.

Man geht dabei zweckmäßigerweise so vor, daß man die Substratplättchen in Wasser suspendiert, die Suspension auf etwa 20 bis 100°C, bevorzugt 40 bis 80°C, erhitzt, mit einer Base (insbesondere einer Alkalimetallhydroxidlösung wie Kalilauge oder Natronlauge) einen pH-Wert von in der Regel 4 bis 9, vorzugsweise 6,5 bis 8,5, insbesondere etwa 7,5, einstellt und die Alkalimetallsilikatlösung unter gleichzeitiger Zugabe einer wäßrigen anorganischen Säure wie Salzsäure, insbesondere einer verdünnten Salzsäure, zur Konstanthaltung des pH-Wertes zudosiert. Gegebenenfalls rührt man wenige min bis zu 2 h nach.

Bei der CVD-Variante kann man gemäß dem in der EP-A-708 154 beschriebenen Verfahren vorgehen. Hierbei werden Silane, die mindestens einen Alkanoyloxyrest enthalten, in der Gasphase mit Wasserdampf und, wenn die Silane auch Alkyl- oder Phenylreste aufweisen, Sauerstoff in Gegenwart der verwirbelten Substratplättchen zersetzt.

Bevorzugte Silane weisen dabei Alkoxy- und Alkanoyloxyreste auf, besonders bevorzugt ist Di-tert.-butoxydiacetoxysilan.

Zur Durchführung der CVD-Variante empfiehlt sich wie allgemein für CVD-Verfahren üblich die Verwendung eines Wirbelschichtreaktors. Die Substratplättchen werden im Reaktor unter Fluidisierung (Verwirbelung) mit einem inerten Wirbelgas wie Stickstoff auf die gewünschte Reaktionstemperatur (in der Regel 100 bis 600°C, bevorzugt 150 bis 300°C) erhitzt, Silan und Wasserdampf (sowie gegebenenfalls Sauerstoff) werden dann mit Hilfe inerter Trägergasströme (vorteilhaft Teilströmen des Wirbelgases) aus vorgeschalteten Verdampfergefäßen über getrennte Düsen eingeleitet, wobei die Silankonzentration zweckmäßigerweise bei ≤ 5 Vol.-%, vorzugsweise bei ≤ 2 Vol.-%, bezogen auf die Gesamtgasmenge im Reaktor, gehalten wird. Die Wasserdampfmenge sollte mindestens der stöchiometrisch zur Hydrolyse des Silans erforderlichen Menge entsprechen, vorzuziehen ist jedoch die 10 bis 100fache Menge.

Auch die Abscheidung der Beschichtungen (B) ist sowohl auf dem CVD-Weg als auch naßchemisch möglich, bevorzugt ist jedoch die CVD-Variante.

Für die zweckmäßigerweise analog der CVD-Variante zur Aufbringung der Siliciumdioxidschicht im Wirbelschichtreaktor durchgeführte CVD-Variante sind Eisencarbonyle, insbesondere Eisenpentacarbonyl, die bevorzugten Ausgangsverbindungen.

α-Eisen(III)oxidschichten werden dabei, wie in der EP-A-33 457 beschrieben, vorteilhaft durch Oxidation des Eisenpentacarbonyls mit sauerstoffhaltigen Gasen, bevorzugt Luft, gegebenenfalls in Anwesenheit von Wasserdampf, bei in der Regel 150 bis 300°C, vorzugsweise etwa 180 bis 220°C, auf den Substratplättchen abgeschieden. Die Fluidisierung der Substratteilchen und die Zuführung von Eisenpentacarbonyl und gegebenenfalls Wasserdampf erfolgt ebenfalls mit Inertgasströmen, insbesondere Stickstoff, wobei die Eisenpentacarbonylkonzentration üblicherweise bei ≤ 5 Vol.-%, vorzugsweise bei ≤ 2 Vol.-%, bezogen auf die Gesamtgasmenge im Reaktor, betragen sollte. Die zugeführte Sauerstoffmenge sollte mindestens der für die Bildung des Eisenoxids stöchiometrisch erforderlichen Menge entsprechen, ein geringer Sauerstoffüberschuß schadet jedoch nicht.

γ-Eisen(III)oxidschichten können, wie in der EP-A-655 486 beschrieben, nach zwei CVD-Varianten erzeugt werden. Entweder kann Eisenpentacarbonyl in Gegenwart mindestens der stöchiometrisch erforderlichen Menge, besser mit der 10- bis 100-fachen Menge, Wasserdampf bei 180 bis 250°C zu Magnetit, Wasserstoff und Kohlenmonoxid zersetzt und der abgeschiedene Magnetitfilm anschließend bei 200 bis 350°C mit Luft zu γ-Fe₂O₃ oxidiert werden, oder Eisenpentacarbonyl kann zunächst durch oxidative Zersetzung als α-Fe₂O₃ abgeschieden werden, welches dann bei 200 bis 400°C mit wasserstoffhaltigen Gasen zu eisen(II)haltigen Produkten reduziert und anschließend wie oben zu γ-Fe₂O₃ oxidiert werden kann.

Zur Abscheidung der bevorzugten α-Eisen(III)oxidschichten (B) auf naßchemischem Weg geht man zweckmäßigerweise so vor, daß man eine wäßrige Suspension der mit (A) belegten Substratplättchen auf üblicherweise 50 bis 100°C, vorzugsweise 70 bis 80°C, erhitzt, mit einer Säure (insbesondere einer verdünnten Salzsäure) einen pH-Wert von in der Regel 0,5 bis 5, bevorzugt 2,5 bis 4,0, insbesondere etwa 3,0, einstellt und eine Eisen(III)chlorid- oder -sulfatlösung unter gleichzeitiger Basenzugabe zur Konstanthaltung des pH-Wertes zudosiert.

Mit Hilfe des erfindungsgemäßen Herstellungsverfahrens können die mehrfach beschichteten Glanzpigmente in einfacher Weise in großen Mengen reproduzierbar hergestellt werden. Es werden vollständig umhüllte Pigmentteilchen mit hoher Qualität der einzelnen Beschichtungen (homogen, filmartig) erhalten.

Die erfindungsgemäßen Glanzpigmente eignen sich vorteilhaft für viele Zwecke, wie zur Einfärbung von Kunststoffen, Gläsern, keramischen Produkten, Zubereitungen der dekorativen Kosmetik und insbesondere von Lacken, Tinten und Druckfarben, auch Sicherheitsdruckfarben. Bei der Applikation im Druck sind alle industrieüblichen Druckverfahren, z.B. Siebdruck, Tiefdruck, Bronzierdruck, Flexodruck und Offsetdruck, geeignet.

Für diese Anwendungszwecke lassen sich die erfindungsgemäßen Pigmente auch vorteilhaft in Abmischung mit transparenten und dekkenden Weiß-, Bunt- und Schwarzpigmenten sowie auch herkömmlichen Glanzpigmenten auf der Basis von metalloxidbeschichteten Glimmer- und Metallpigmenten und bekannten goniochromatischen Glanzpigmenten verwenden.

### Beispiele

### Herstellung und Anwendung von erfindungsgemäßen Glanzpigmenten

5 Zur Beurteilung der Koloristik der erhaltenen Pigmente wurden jeweils 0,4 g Pigment in 3,6 g eines Polyester-Mischlacks mit 21 Gew.-% Feststoffanteil eingerührt und 2 min in einem Red Devil® dispergiert. Mit einer Rakel (200 µm Naßfilmdicke, einfache Rakelung) wurden anschließend Abzüge der pigmentierten Lacke auf einem schwarzweißen Karton angefertigt. Die Messung der CIELAB-Werte erfolgte nach dem Trocknen des Films mit einem Gonio-Spektralphotometer Multiflash (Fa. Optronik) bei einer Winkeldifferenz von 20° bis 115° zum Glanzwinkel über schwarzem Untergrund. Die Angaben der Farbwerte beziehen sich auf die Normlichtart D65. L entspricht der Helligkeit, a* dem Rot- bzw. Grünanteil und b* dem Blau- bzw. Gelbanteil, H ist der Farbwinkel und C das Chroma. Bei dieser Meßanordnung wird nur ein Teil des Farbenspiels, nämlich im wesentlichen die Farbe der Lackierung in Aufsicht, erfaßt.

### Beispiel 1

a) 130 g eines blausilbernen, mit Ammoniak reduzierten, TiO₂-Glimmerpigments (Paliocrom® Blausilber L6000, BASF) wurden in 1,5 l Isopropanol aufgeschlämmt, zunächst mit 520 g Wasser und 52 g 25 gew.-%iger wäßriger Ammoniaklösung und nach Erhitzen auf 60°C in ca. 20 h mit einem Gemisch von 450 g Tetraethoxysilan und 450 g Isopropanol versetzt. Nach einer Nachrührzeit von ca. 2 h und Abkühlen der Suspension wurde das Produkt abfiltriert, mit Isopropanol gewaschen und unter vermindertem Druck bei 80°C getrocknet.
   Das getrocknete SiO₂-beschichtete Pigment (264 g) zeigte an der Luft eine rötliche Körperfarbe.
   Schritt a) wurde insgesamt viermal wiederholt.
b) 1 kg des SiO₂-beschichteten und getrockneten Produkts aus Schritt a) wurde in einem Wirbelschichtreaktor unter Fluidisierung mit 1500 1/h Stickstoff auf 200°C erhitzt. Dann wurden über getrennte Düsen zusätzlich 250 1/h über eine auf 50°C temperierte Wasservorlage geleiteter Stickstoff, 250 1/h Luft sowie 400 1/h über eine auf Raumtemperatur gehaltene Vorlage mit Eisenpentacarbonyl geleiteter Stickstoff zugeführt. 230 g Eisenpentacarbonyl wurden so in 10 h in den Reaktor überführt und dort zu sich auf den Pigmentplättchen abscheidendem α-Fe₂O₃ zersetzt.

Das erhaltene Pigment hatte einen Siliciumgehalt von 27,9 Gew.-%, einen Titangehalt von 7,7 Gew.-% und einen Eisengehalt von 5,2 Gew.-%. Im Lack appliziert, zeigte das Pigment in Aufsicht eine blaue Interferenzfarbe, die mit zunehmender Schrägsicht nach Rotviolett abkippte.

### Farbmetrische Daten des erhaltenen Pigments:

| Meßwinkel in ° | L | a* | b* | C | H |
|---|---|---|---|---|---|
| 20 | 65,2 | 2,2 | -25,6 | 25,7 | 274,8 |
| 25 | 55,2 | -0,1 | -22,3 | 22,3 | 269,8 |
| 35 | 39,3 | -2,3 | -15,5 | 15,7 | 261,4 |
| 45 | 28,8 | -2,2 | -10,6 | 10,9 | 258,2 |
| 55 | 22,1 | -1,4 | -7,5 | 7,6 | 259,2 |
| 65 | 16,6 | -0,3 | -4,5 | 4,5 | 266,7 |
| 75 | 15,5 | 0,0 | -4,0 | 4,0 | 270,0 |
| 115 | 12,1 | 0,7 | -1,1 | 1,3 | 301,1 |

### Beispiel 2

a) 130 g des Glimmerpigments aus Beispiel 1 wurden analog Beispiel 1a), jedoch unter Verwendung eines Gemisches von 500 g Tetraethoxysilan und 500 g Isopropanol in ca. 22 h mit Siliciumdioxid beschichtet.
   Das getrocknete SiO₂-beschichtete Pigment (281 g) zeigte an der Luft eine violette Körperfarbe.
   Schritt a) wurde insgesamt viermal wiederholt.
b) 1 kg des SiO₂-beschichteten und getrockneten Produkts aus Schritt a) wurde analog Beispiel 1b) mit α-Fe₂O₃ beschichtet.

Das erhaltene Pigment hatte einen Siliciumgehalt von 29,0 Gew.-%, einen Titangehalt von 7,4 Gew.-% und einen Eisengehalt von 6,2 Gew.-%. Im Lack appliziert, zeigte das Pigment in Aufsicht eine grüne Interferenzfarbe, die mit zunehmender Schrägsicht in ein rotstichiges Blau abkippte.

### Farbmetrische Daten des erhaltenen Pigments:

| Meßwinkel in ° | L | a* | b* | C | H |
|---|---|---|---|---|---|
| 20 | 74,8 | -17,7 | -11,9 | 21,3 | 213,9 |
| 25 | 63,5 | -15,5 | -8,4 | 17,6 | 208,5 |
| 35 | 45,0 | -10,6 | -3,4 | 11,1 | 197,7 |
| 45 | 32,8 | -6,7 | -1,3 | 6,8 | 190,7 |
| 55 | 25,4 | -4,1 | -0,5 | 4,1 | 187,2 |
| 65 | 19,6 | -1,6 | -0,2 | 1,7 | 187,6 |
| 75 | 18,4 | -1,1 | -0,1 | 1,1 | 186,9 |
| 115 | 14,3 | 0,7 | 0,7 | 1,0 | 43,1 |

### Beispiel 3

a) 130 g des Glimmerpigments aus Beispiel 1 wurden analog Beispiel 1a), jedoch unter Verwendung eines Gemisches von 810 g Tetraethoxysilan und 810 g Isopropanol in ca. 36 h mit Siliciumdioxid beschichtet.
   Das getrocknete SiO₂-beschichtete Pigment (370 g) zeigte an der Luft eine rötliche Körperfarbe.
   Schritt a) wurde insgesamt dreimal wiederholt.
b) 1 kg des SiO₂-beschichteten und getrockneten Produkts aus Schritt a) wurde analog Beispiel 1b), jedoch unter Verwendung von 190 g Eisenpentacarbonyl mit α-Fe₂O₃ beschichtet.

Das erhaltene Pigment hatte einen Siliciumgehalt von 31,0 Gew.-%, einen Titangehalt von 5,9 Gew.-% und einen Eisengehalt von 4,5 Gew.-%. Im Lack appliziert, zeigte das Pigment in Aufsicht eine blaue Interferenzfarbe, die mit zunehmender Schrägsicht über violett nach Rotgold abkippte.

### Farbmetrische Daten des erhaltenen Pigments:

| Meßwinkel in ° | L | a* | b* | C | H |
|---|---|---|---|---|---|
| 20 | 70,0 | 24,9 | -17,0 | 30,1 | 325,7 |
| 25 | 58,7 | 19,3 | -15,3 | 24,6 | 321,5 |
| 35 | 41,7 | 9,8 | -10,1 | 14,1 | 313,9 |
| 45 | 31,3 | 4,8 | -5,3 | 7,2 | 312,1 |
| 55 | 25,0 | 3,0 | -1,9 | 3,5 | 327,2 |
| 65 | 20,1 | 2,1 | 1,2 | 2,5 | 30,3 |
| 75 | 19,0 | 2,0 | 1,7 | 2,7 | 40,2 |
| 115 | 15,5 | 2,0 | 3,5 | 4,0 | 60,8 |

### Beispiel 4

a) 130 g des Glimmerpigments aus Beispiel 1 wurden analog Beispiel 1a), jedoch unter Verwendung eines Gemisches von 880 g Tetraethoxysilan und 880 g Isopropanol in ca. 40 h mit Siliciumdioxid beschichtet.
   Das getrocknete SiO₂-beschichtete Pigment (387 g) zeigte an der Luft eine rotviolette Körperfarbe.
   Schritt a) wurde insgesamt dreimal wiederholt.
b) 1 kg des SiO₂-beschichteten und getrockneten Produkts aus Schritt a) wurde analog Beispiel 1b), jedoch unter Verwendung von 190 g Eisenpentacarbonyl mit α-Fe₂O₃ beschichtet.

Das erhaltene Pigment hatte einen Siliciumgehalt von 31,5 Gew.-%, einen Titangehalt von 5,6 Gew.-% und einen Eisengehalt von 4,6 Gew.-%. Im Lack appliziert, zeigte das Pigment in Aufsicht eine grüne Interferenzfarbe, die mit zunehmender Schrägsicht über Blau nach Rotviolett abkippte.

### Farbmetrische Daten des erhaltenen Pigments:

| Meßwinkel in ° | L | a* | b* | C | H |
|---|---|---|---|---|---|
| 20 | 69,6 | -3,6 | -14,3 | 14,8 | 255,8 |
| 25 | 59,4 | -7,4 | -10,3 | 12,7 | 234,3 |
| 35 | 43,3 | -10,1 | -3,3 | 10,6 | 198,0 |
| 45 | 32,6 | -8,1 | 0,5 | 8,1 | 176,3 |
| 55 | 25,7 | -5,2 | 2,4 | 5,8 | 155,1 |
| 65 | 20,2 | -2,1 | 3,6 | 4,1 | 120,3 |
| 75 | 19,0 | -1,4 | 3,8 | 4,0 | 110,9 |
| 115 | 15,0 | 0,1 | 4,1 | 4,1 | 88,4 |

### Beispiel 5

a) 130 g des Glimmerpigments aus Beispiel 1 wurden analog Beispiel 1a), jedoch unter Verwendung eines Gemisches von 950 g Tetraethoxysilan und 950 g Isopropanol in ca. 44 h mit Siliciumdioxid beschichtet.
   Das getrocknete SiO₂-beschichtete Pigment (421 g) zeigte an der Luft eine blauviolette Körperfarbe.
   Schritt a) wurde insgesamt dreimal wiederholt.
b) 1 kg des SiO₂-beschichteten und getrockneten Produkts aus Schritt a) wurde analog Beispiel 1b), jedoch unter Verwendung von 190 g Eisenpentacarbonyl mit α-Fe₂O₃ beschichtet.

Das erhaltene Pigment hatte einen Siliciumgehalt von 32,0 Gew.-%, einen Titangehalt von 5,3 Gew.-% und einen Eisengehalt von 5,2 Gew.-%. Im Lack appliziert, zeigte das Pigment in Aufsicht eine goldgrüne Interferenzfarbe, die mit zunehmender Schrägsicht über Grün nach Blauviolett abkippte.

### Farbmetrische Daten des erhaltenen Pigments:

| Meßwinkel in ° | L | a* | b* | C | H |
|---|---|---|---|---|---|
| 20 | 77,0 | -29,8 | 10,4 | 31,5 | 160,8 |
| 25 | 65,9 | -25,8 | 12,3 | 28,5 | 154,5 |
| 35 | 47,8 | -16,2 | 12,4 | 20,4 | 142,7 |
| 45 | 35,6 | -8,9 | 10,2 | 13,6 | 131,2 |
| 55 | 27,9 | -4,4 | 8,2 | 9,3 | 118,1 |
| 65 | 21,8 | -0,9 | 6,5 | 6,6 | 97,8 |
| 75 | 20,6 | -0,2 | 6,2 | 6,2 | 91,8 |
| 115 | 16,6 | 1,3 | 5,1 | 5,3 | 75,5 |

## Patentansprüche

1. Goniochromatische Glanzpigmente auf der Basis von in einer reduzierenden Atmosphäre erhitzten, titandioxidbeschichteten silikatischen Plättchen, die mindestens ein Schichtpaket aus
A) einer farblosen Beschichtung mit einem Brechungsindex n ≤ 1,8 und
B) einer sichtbares Licht selektiv absorbierenden, Eisen(III)oxid enthaltenden Beschichtung mit einem Brechungsindex n ≥ 2,0
aufweisen.

2. Glanzpigmente nach Anspruch 1, bei denen die Beschichtung (B) im wesentlichen aus α-Fe₂O₃ oder γ-Fe₂O₃ oder deren Mischungen besteht.

3. Glanzpigmente nach Anspruch 1 oder 2, bei denen die Beschichtung (B) eine geometrische Schichtdicke von 5 bis 80 nm hat.

4. Glanzpigmente nach den Ansprüchen 1 bis 3, bei denen die Beschichtung (A) im wesentlichen aus Siliciumoxid, Siliciumoxidhydrat, Aluminiumoxid oder Aluminiumoxidhydrat oder deren Mischungen besteht.

5. Glanzpigmente nach den Ansprüchen 1 bis 4, die nur ein Schichtpaket (A) + (B) enthalten.

6. Glanzpigmente nach den Ansprüchen 1 bis 5, bei denen die titandioxidbeschichteten silikatischen Plättchen in einer reduzierenden Atmosphäre, die Ammoniakgas, Wasserstoff oder flüchtige Kohlenwasserstoffe oder deren Gemische enthält, erhitzt worden sind.

7. Glanzpigmente nach den Ansprüchen 1 bis 6, bei denen die titandioxidbeschichteten silikatischen Plättchen in einer reduzierenden, Ammoniakgas oder ein Gemisch von Ammoniakgas und flüchtigen Kohlenwasserstoffen enthaltenden Atmosphäre erhitzt worden sind.

8. Verfahren zur Herstellung von Glanzpigmenten gemäß den Ansprüchen 1 bis 7, **dadurch gekennzeichnet, daß** man die Beschichtungen (A) und (B) unabhängig voneinander entweder naßchemisch durch hydrolytische Zersetzung organischer oder anorganischer Metallverbindungen oder durch Gasphasenzersetzung flüchtiger, organischer oder anorganischer Metallverbindungen auf die in einer reduzierenden Atmosphäre erhitzten, titandioxidbeschichteten silikatischen Plättchen aufbringt.

9. Verwendung von Glanzpigmenten gemäß den Ansprüchen 1 bis 7 zur Einfärbung von Lacken, Druckfarben, Tinten, Kunststoffen, Gläsern, keramischen Produkten und Zubereitungen der dekorativen Kosmetik.

## Claims

1. Goniochromatic luster pigments based on titanium dioxide-coated silicatic platelets which have been heated in a reducing atmosphere and which comprise at least one layer packet comprising
A) a colorless coating having a refractive index n ≤ 1.8 and
B) a coating which has a refractive index n ≥ 2.0, which includes iron(III) oxide and which selectively absorbs visible light.

2. Luster pigments as claimed in claim 1, wherein said coating (B) consists essentially of α-Fe₂O₃ or γ-Fe₂O₃ or mixtures thereof.

3. Luster pigments as claimed in claim 1 or 2, wherein said coating (B) has a geometric layer thickness of 5 to 80 nm.

4. Luster pigments as claimed in any of claims 1 to 3, wherein said coating (A) consists essentially of silicon oxide, silicon oxide hydrate, aluminum oxide or aluminum oxide hydrate or mixtures thereof.

5. Luster pigments as claimed in any of claims 1 to 4, comprising just one layer packet (A) + (B).

6. Luster pigments as claimed in any of claims 1 to 5, wherefor the titanium dioxide-coated silicatic platelets have been heated in a reducing atmosphere comprising ammonia gas, hydrogen or volatile hydrocarbons or mixtures thereof.

7. Luster pigments as claimed in any of claims 1 to 6, wherefor the titanium dioxide-coated silicatic platelets have been heated in a reducing atmosphere comprising ammonia gas or a mixture of ammonia gas and volatile hydrocarbons.

8. A process for producing luster pigments as claimed in any of claims 1 to 7, which comprises applying said coatings (A) and (B) independently of each other to said titanium dioxide-coated silicatic platelets which have been heated in a reducing atmosphere either wet-chemically by hydrolytic decomposition of organic or inorganic metal compounds or by gas phase decomposition of volatile, organic or inorganic metal compounds.

9. The use of luster pigments as claimed in any of claims 1 to 7 for coloring coatings, inks, including printing inks, plastics, glasses, ceramic products and decorative cosmetic preparations.

## Revendications

1. Pigments brillants goniochromatiques à base de paillettes siliceuses revêtues de dioxyde de titane chauffées sous une atmosphère réductrice, qui présentent au moins un ensemble de couches composé
A) d'un revêtement incolore, lequel présente un indice de réfraction n ≤ 1,8 et
B) d'un revêtement contenant de l'oxyde de fer(III) absorbant la lumière visible de façon sélective, lequel présente un indice de réfraction n ≥ 2,0.

2. Pigments brillants selon la revendication 1, dans lesquels le revêtement (B) est essentiellement composé de α-Fe₂O₃ ou de γ-Fe₂O₃ ou de mélanges de ceux-ci.

3. Pigments brillants selon la revendication 1 ou 2, dans lesquels le revêtement (B) présente une épaisseur de couche géométrique allant de 5 à 80 nm.

4. Pigments brillants selon les revendications 1 à 3, dans lesquels le revêtement (A) est essentiellement composé d'oxyde de silicium, d'oxyde de silicium hydraté, d'oxyde d'aluminium ou d'oxyde d'aluminium hydraté ou de mélanges de ceux-ci.

5. Pigments brillants selon les revendications 1 à 4, qui ne contiennent qu'un seul ensemble de couches (A) + (B).

6. Pigments brillants selon les revendications 1 à 5, dans lesquels les paillettes siliceuses revêtues de dioxyde de titane ont été chauffées sous une atmosphère réductrice contenant de l'ammoniac, de l'hydrogène ou des hydrocarbures volatils ou des mélanges de ceux-ci.

7. Pigments brillants selon les revendications 1 à 6, dans lesquels les paillettes siliceuses revêtues de dioxyde de titane ont été chauffées sous une atmosphère réductrice contenant de l'ammoniac ou un mélange d'ammoniac et d'hydrocarbures volatils.

8. Procédé de fabrication de pigments brillants selon les revendications 1 à 7, **caractérisé en ce que** l'on dépose les couches (A) et (B) indépendamment l'une de l'autre, soit par voie humide au moyen d'une décomposition hydrolytique de composés métalliques organiques ou inorganiques, soit au moyen d'une décomposition en phase gazeuse de composés métalliques volatils, organiques ou inorganiques, sur les paillettes siliceuses revêtues de dioxyde de titane chauffées sous une atmosphère réductrice.

9. Utilisation des pigments brillants selon les revendications 1 à 7, pour colorer des vernis, des encres d'impression, des encres, des matières plastiques, du verre, des produits céramiques et des préparations de produits esthétiques décoratifs.
